(19) Europäisches Patentamt
European Patent Office
Office européen des brevets

(11) **EP 3 113 077 B1**

(12) **EUROPEAN PATENT SPECIFICATION**

(45) Date of publication and mention
of the grant of the patent:
**29.08.2018 Bulletin 2018/35**

(51) Int Cl.:
***G06K 9/46*** *(2006.01)*

(21) Application number: **15461543.9**

(22) Date of filing: **30.06.2015**

(54) **METHOD FOR IMAGE FEATURE POINT DESCRIPTION**

VERFAHREN ZUR BILDMERKMALSPUNKTBESCHREIBUNG

PROCÉDÉ DE DESCRIPTION DE POINT DE CARACTÉRISTIQUE D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2017 Bulletin 2017/01**

(73) Proprietor: **Lingaro Sp. z o.o.
02-595 Warszawa (PL)**

(72) Inventors:
• **Sarwas, Grzegorz
02-679 Warszawa (PL)**
• **Iwanowski, Marcin
01-494 Warszawa (PL)**
• **Cacko, Arkadiusz
05-400 Otwock (PL)**
• **Swiercz, Michal
15-661 Bialystok (PL)**

(74) Representative: **Kancelaria Eupatent.pl Sp. z.o.o
Ul. Kilinskiego 185
90-348 Lodz (PL)**

(56) References cited:
EP-A1- 2 782 067      US-A1- 2012 070 070
US-A1- 2012 134 576      US-B1- 8 054 170

• **CHALECHALE A ET AL: "Edge image description using angular radial partitioning", IEE PROCEEDINGS: VISION, IMAGE AND SIGNAL PROCESSING, INSTITUTION OF ELECTRICAL ENGINEERS, GB, vol. 151, no. 2, 30 April 2004 (2004-04-30), pages 93-101, XP006021706, ISSN: 1350-245X, DOI: 10.1049/IP-VIS:20040332**

• **AIBING RAO ET AL: "Spatial color histograms for content-based image retrieval", TOOLS WITH ARTIFICIAL INTELLIGENCE, 1999. PROCEEDINGS. 11TH IEEE INTER NATIONAL CONFERENCE ON CHICAGO, IL, USA 9-11 NOV. 1999, LOS ALAMITOS, CA, USA,IEEE COMPUT. SOC, US, 9 November 1999 (1999-11-09), pages 183-186, XP010365157, DOI: 10.1109/TAI.1999.809784 ISBN: 978-0-7695-0456-8**

• **MIKOLAJCZYK K ET AL: "A performance evaluation of local descriptors", IEEE TRANSACTIONS ON PATTERN ANALYSIS AND MACHINE INTELLIGENCE, IEEE COMPUTER SOCIETY, USA, vol. 27, no. 10, October 2005 (2005-10), pages 1615-1630, XP002384824, ISSN: 0162-8828, DOI: 10.1109/TPAMI.2005.188**

• **WU F C ET AL: "Feature vector field and feature matching", PATTERN RECOGNITION, ELSEVIER, GB, vol. 43, no. 10, October 2010 (2010-10), pages 3273-3281, XP027095419, ISSN: 0031-3203 [retrieved on 2010-06-18]**

• **YAN PU ET AL: "Local image descriptor based on spectral embedding", IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 9, no. 2, April 2015 (2015-04), pages 278-289, XP006051480, ISSN: 1751-9632, DOI: 10.1049/IET-CVI.2014.0124**

• **LEI QIN ET AL: "Image Matching Based on a Local Invariant Descriptor", IMAGE PROCESSING, 2005. ICIP 2005. IEEE INTERNATIONAL CONFERENCE ON, IEEE, PISCATAWAY, NJ, USA,IEEE, vol. 3, 11 September 2005 (2005-09-11), pages 377-380, XP010852668, ISBN: 978-0-7803-9134-5**

- **GABRIEL TAKACS ET AL: "Permutable descriptors for orientation-invariant image matching", PROCEEDINGS OF SPIE, vol. 7798, 19 August 2010 (2010-08-19), page 77980M, XP55235179, US ISSN: 0277-786X, DOI: 10.1117/12.863993 ISBN: 978-1-62841-730-2**

**Description**

TECHNICAL FIELD

The present invention is related to image analysis, in particular to scene analysis for detecting objects on an image using feature point detection and description.

BACKGROUND

Huge amount of image data affects the dynamic development of scene analysis algorithms. A large number of such algorithms are used to compare images or to extract the image content.

One of the most efficient approaches to the comparison of images or their parts is based on feature point descriptors. Feature points are automatically extracted image points that indicated meaningful details of the visual scene that is shown on the image. Usually, they are based on image points, edges, or objects present on the image.

There are known image analysis methods for detecting whether a particular feature point of an image is a part of some particular object to be detected on that image. These methods are described e.g. in the following publications (for clarity of the text, the list of publications is provided at the end of the description): [smith97, lowe99, lowe04, bay08, rosten10, calonder10, leutenberger11, rublee11, alahi12]

Most of these methods comprise two basic steps: detecting a feature point (by detector algorithms) and describing a surrounding of the feature point to build a structure called a feature vector (by descriptor algorithms).

Two types of feature point detectors are mainly used. One type is related to detection of corner points (e.g. Harris operator [harris88], FAST, Shi and Tomasi [lucas81, tomasi81, shi94], Level curve curvature, SUSAN [smith97]).

Another type is blob detection, based on e.g Laplacian of Gaussians (LoG) used in SIFT [lwe99, lowe04],, or some of its approximation based on the Difference of Gaussians (DoG) SURF [bay08], Determinant of Hessian (DoH) and Maximally stable extremal regions - MSER [matas02].

In turn, the descriptors are used to describe the environment of the feature point based on the value of the surrounding pixels. The descriptors build feature vectors which contain different measure of the analyzed region. The may include such measures as differential value between feature point and surrounding pixels values, relationships of their luminance (LBP, BRIEF [calonder10], ORB [rublee11]), information about illumination changing in surrounding regions (SIFT, SURF), histogram of these changes (HOG) and etc.

The popular feature point detectors are subject to IPR protection, e.g. SIFT [lowe99,lowe04] is the subject of a US patent US6711293 and SURF [bay08] is the subject of a US patent US8165401.

A US patent application US2012070070 discloses a method for processing data that includes receiving a depth map of a scene containing a humanoid form, wherein respective descriptors are extracted from the depth map based on the depth values in a plurality of patches distributed in respective positions over the humanoid form. The method comprises describing a surrounding of a feature point in an image by a feature vector.

A European patent application EP2782067 discloses a local feature descriptor extracting apparatus that includes: a feature point detecting unit which detects a plurality of feature points in an image and which outputs feature point information that is information regarding each feature point.

There is a need for further development of detector and descriptor methods, in order to find alternative methods that would not require licensing of proprietary rights associated with the existing methods.

SUMMARY

The object of the invention is a computer-implemented method for describing a surrounding of a feature point (F) in an image by a feature vector (D) according to the appended claims.

BRIEF DESCRIPTION OF FIGURES

The methods and systems described herein are illustrated by means of example embodiments on a drawing, in which:

Figs. 1A, 1B show examples of division of image to segments and sectors;
Figs. 2A, 2B show examples of assignment of image pixels to segments and sectors;
Fig. 3 shows a schematic of a method for describing a surrounding of a feature point in an image by a feature vector;
Fig. 4 shows a descriptor pixel mask;
Figs. 5A, 5B show directional gradients;
Fig. 6 shows a schematic of a method for detecting feature points F;

Fig. 7B shows an example result of computation of the cornerness function C for a grayscale image shown in Fig. 7A.
Fig. 8 shows a computer-implemented image processing system.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

DETAILED DESCRIPTION

The present invention provides a new descriptor method. The method assigns pixels located within a given surrounding of a feature point to sectors, each of which comprises a plurality of pixels, wherein the sectors are grouped into a plurality (e.g. 2) of several-pixel-thick (e.g. 2-pixel thick) non-overlapping rings. Each ring is divided into a plurality of sectors (e.g. 8 sectors) that are characterized by the angular range (i.e. angular interval) which is the same for all sectors belonging to the same ring. The number of sectors and/or the angular interval for each sector is the same for all rings. The method is particularly useful when combined with an improved detector method utilizing a directional gradient mask and a formula for computing a cornerness function.

The division of the surrounding of the feature point into rings allows for enriching the point description by considering the neighborhood at multiple levels. When using appropriate descriptor comparison scheme, it may be used as multiscale descriptor. Depending on the image scale, the same details of the feature point's surrounding may appear on various distances, what could be registered as similar-looking distributions of measured values on various rings. The proposed multilevel descriptor allows for scale-invariant matches of feature point descriptors. A change of scale of the image may result in a change of position of some characteristic details located within the surrounding of the feature point. In the proposed approach, in such a situation, these characteristic details will move from one ring to the consecutive one, and become a part of the next radial part of the descriptor

Let the surrounding of the feature point be divided into $m$ rings. Each ring is divided into $n$ sectors. Consequently, the entire surrounding is divided into $nm$ sectors denoted $S_{i,j}$. The elements of $S_{i,j}$ are shift vectors indicating the position of a pixel being an element of a sector relative to the coordinates of feature pixel (x,y). Let:

$$S_{i,j} = \{(x_1, y_1), (x_2, y_2), \dots (x_k, y_k)\}$$

be the j-th sector (j<=n) in the i-th ring (i<=m). The coordinates of pixels are defined in a coordinate system centered at the feature point (x,y), the coordinates of which are thus equal to (0,0). Due to a circular properties of sectors, pixels belonging to feature point's surrounding can also be described using polar coordinates. Let the radius and angle of pixel (x,y) be denoted as, respectively:

$$r(x, y), \theta(x, y)$$

For pixels (x',y') belonging to particular sector $S_{i,j}$ of the surrounding of the feature point (x,y) two conditions are met, determining the relation between pixel coordinates and the indexes of ring and of sector:

- Radial condition:

-

$$- \quad (x^{'}, y^{'}) \in S_{i,j} \Rightarrow 2i - 1 \le r(x' - x, y' - y) \le 2i.$$

- Angular condition

$$(x^{'}, y^{'}) \in S_{i,j} \Rightarrow (j - 1) \cdot \frac{360°}{n} - \frac{\delta}{2} \le \theta(x^{'} - x, y^{'} - y) \le (j - 1) \cdot \frac{360°}{n} + \frac{\delta}{2},$$

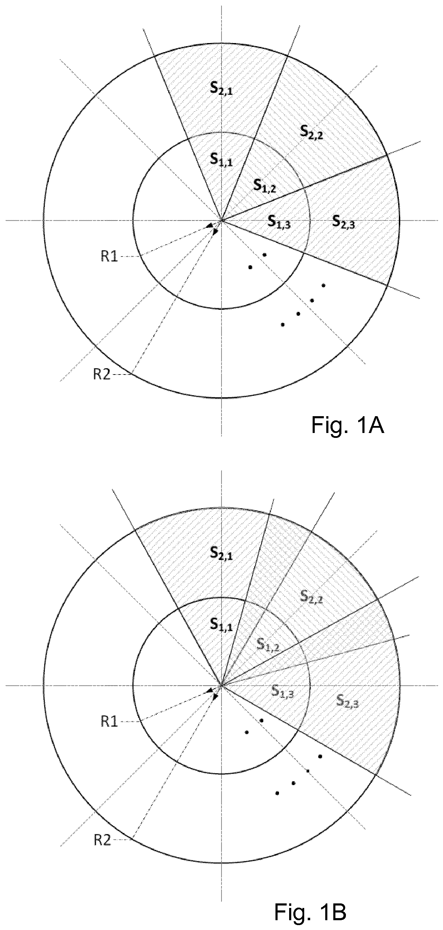

where $\delta$ stands for the angular interval of a sector: $\frac{360°}{n} \le \delta \le \frac{720°}{n}$. The angular interval for each sector may be such that the sectors are adjacent one to another (as shown in Fig. 1A), i.e. the sum of all angular intervals for all sectors is 360 degrees. In such a case:

$$\delta = \frac{360°}{n}$$

Otherwise, the angular interval for each sector is such that the adjacent sectors partially overlap each other (as shown in Fig. 1B), i.e. the sum of all angular intervals for all sectors is between 360 and 720 degrees. In Fig. 1B, a pixel belongs to a sector if any of its part is covered by the angular interval of that sector. In such a case we assume that that angular intervals of the overlapping region for all sectors are equal to:

$$\delta - \frac{360°}{n}$$

The property of sectors' partial overlap is important because it increases the insensitivity of the descriptor to rotations by angles other than multiple of 45 degrees. Thanks to the overlapping parts of the ring, each sector covers the angle interval greater than 45 degrees what implies that the rotation by an angle being considered in this case does not influence greatly on the measures computed in sectors of the same ring. The overlapping interval is the same for all sectors.

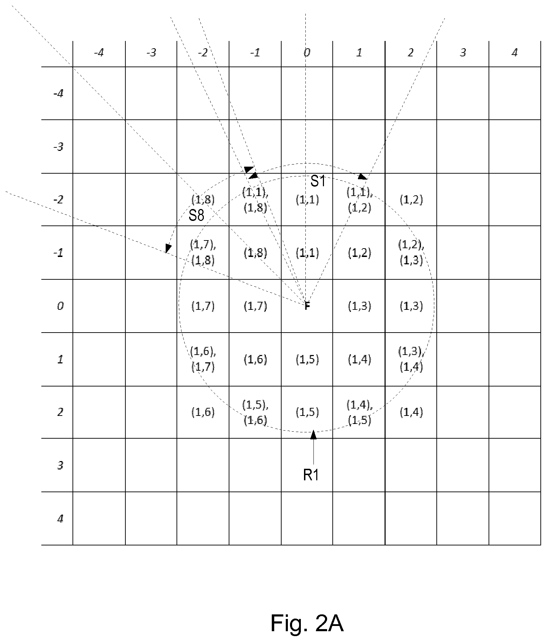

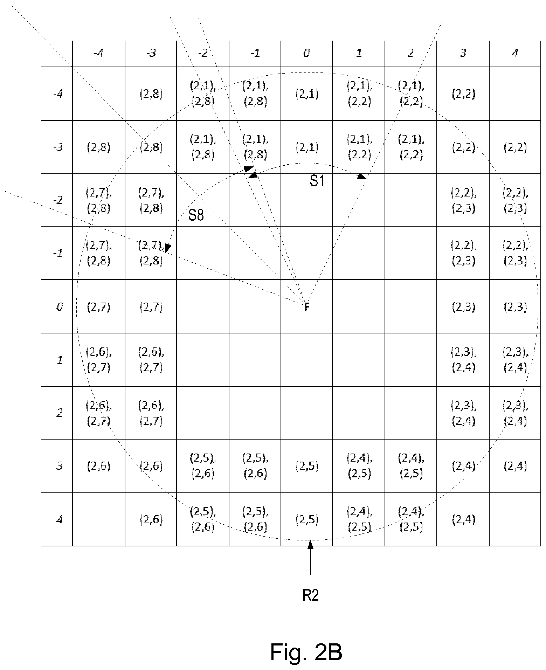

Figs. 2A and 2B show an example of a division of pixels surrounding the feature point to ring-shaped segments and sectors, wherein the sectors overlap and have an angle interval of about 50 degrees.

It can be defined that a pixel may be considered to belong to a particular sector if more than a predefined amount (e.g. more than 30%) of the pixel is within the angular interval of the sector, as shown in Fig. 2A (e.g. the sector having coordinates x=0; y=-1 does not belong to sector 1,8 as less than 30% of its area is covered by the angular interval of sector 8).

Alternatively, as shown for Fig. 2B, it can be defined that a pixel belongs to a sector if any of its part is covered by the angular interval of that sector.

Therefore, the criteria on whether the pixel belongs to a particular sector may be the same for all rings, or may be different for different rings. Fig. 2A shows an example of a first ring consisting of pixels located not farther than a first radius R1 from the feature point, wherein the first radius can be defined as a number of pixels, for example 2 pixels. Fig. 2B shows an example of a second ring consisting of pixels located not farther than a second radius R2 from the feature point and that do not belong to the first ring, wherein the second radius can be defined as a number of pixels, for example 4 pixels. In order to obtain a more detailed description of the surrounding, further rings can be introduced. For example, a third ring may consist of pixels located not farther than 6 pixels from feature point, that do not belong to any other smaller ring.

The thickness of rings equal to 2 pixels (as shown in Figs. 2A and 2B) is the optimal value. On the one hand it, since it is higher than 1, it allows to increase the number of pixels in each sector, what in turn increases the robustness to the small local variations caused by the noise. On the other hand, greater thickness of rings would make them too expansive and, consequently not able to reflect local variations of pixel values within the feature point surrounding. The thickness of each ring being equal to 2 allows to improve the level of noise-resistance as compared to 1-pixel-thick rings.

The example configuration of the surrounding shown in Figs. 2A and 2B consists of two rings (n=2) divided into eight sectors (m=8), with angular intervals equal to about 50 degrees. Orientations of sectors are equal to: 0, 45, 90, 135, 180, 225, 270, 315 degrees. The indices i, j used to define sectors are shown in Figs. 2A and 2B.

Ring 1 consists of the following sectors:

$$S_{1,1} = \{(-1,-2), (0,-2), (1,-2), (0,-1)\}$$

$$S_{1,2} = \{(1,-2), (2,-2), (1,-1), (2,-1)\}$$

$$S_{1,3} = \{(2,-1), (1,0), (2,0), (2,1)\}$$

$$S_{1,4} = \{(2,1), (1,1), (2,2), (1,2)\}$$

$$S_{1,5} = \{(1,2), (0,1), (0,2), (-1,2)\}$$

$$S_{1,6} = \{(-1,2), (-1,1), (-1,2), (-2,1)\}$$

$$S_{1,7} = \{(-2,1), (-1,0), (-2,0), (-2,-1)\}$$

$$S_{1,8} = \{(-2,-1), (-1,-1), (-2,-2), (-1,-2)\}$$

which means that, for example, sector 1 of ring 1 comprises pixels having indices (x=-1,y=-2),(x=0,y=-2),(x=1,y=-2) and (x=0,y=-1) with respect to the indices of the feature point (x=0, y=0).

In analogy, the second ring consist of the following sectors:

$$S_{2,1} = \{(-2,-4), (-2,-3), (-1,-4), (-1,-3), (0,-4), (0,-3), (1,-4), (1,-3), (2,-4), (2,-3)\}$$

$$S_{2,2} = \{(1,-4), (1,-3), (2,-4), (2,-3), (3,-4), (3,-3), (4,-3), (3,-2), (4,-2), (3,-1), (4,-1)\}$$

$$S_{2,3} = \{(3,-2), (4,-2), (3,-1), (4,-1), (3,0), (4,0), (3,1), (4,1), (3,2), (4,2)\}$$

$$S_{2,4} = \{(3,1), (4,1), (3,2), (4,2), (3,3), (4,3), (3,4), (2,3), (2,4), (1,3), (1,4)\}$$

$$S_{2,5} = \{(2,3), (2,4), (1,3), (1,4), (0,3), (0,4), (-1,3), (-1,4), (-2,3), (-2,4)\}$$

$$S_{2,6} = \{(-1,3), (-1,4), (-2,3), (-2,4), (-3,3), (-3,4), (-4,3), (-3,2), (-4,2), (-3,1), (-4,1)\}$$

$$S_{2,7} = \{(-3,-2), (-4,-2), (-3,-1), (-4,-1), (-3,0), (-4,0), (-3,1), (-4,1), (-3,2), (-4,2)\}$$

$$S_{2,8} = \{(-1,-4), (-1,-3), (-2,-4), (-2,-3), (-3,-4),$$
$$(-3,-3), (-4,-3), (-3,-2), (-4,-2), (-3,-1), (-4,-1)\}$$

The top row and the left column in figs. 1 and 2 indicate the pixel coordinates with respect to the central coordinate x=0; y=0 at which the feature point F is located. For example, the pixel located at coordinates x=0; y=-1 has indices (1,1) which means that the pixel belongs to sector 1 of ring 1. The pixel located at coordinates x=1; y=-1 has indices (1,2) which means that the pixel belongs to sector 2 of ring 1. The pixel located at coordinates x=-1; y=-1 has indices (1,8) which means that the pixel belongs to sector 8 of ring 1. The pixel located at coordinates x=0; y=-2 has indices (1,1) which means that the pixel belongs to sector 1 of ring 1 (i.e. it is in the sector located in the same angular interval as the pixel having coordinates x=0, y=-1). The pixels located at coordinates x=0; y=-3 and x=0; y=-4 have indices (2,1) which means that that pixels belong to sector 1 of ring 2.

Therefore, some pixels may belong to two sectors, for example the pixel located at coordinates x=1; y=-2 has indices (1, 1), (1, 2) which means that that pixel belongs to sectors 1 and 2 of ring 1.

Sectors are used to define the area where statistical measures are computed. Two kinds of measures may be considered: location and dispersion. Among the first group, location measures, the following may be used: arithmetic mean, median, truncated mean. Apart from or instead of the above measures, the dispersion measures may be applied, for example standard deviation, variance, mean absolute deviation.

Location and dispersion measures are computed based on values of underlying image(s) that can be either original image(s) and/or transformed one(s). The values of pixels in the original image are represented by values of red, green and blue components. It may be also transformed into any other color space (YUV, HSV) or reduced to luminance component using one of known mathematic relations defining such conversion. Another possibility is to use the transformed image as the source for measures. The transformed image may contain, automatically detected, information that is related to local gradient orientation or any other orientation coefficient. It can also be a cornerness function computed in the second phase of the proposed algorithm.

Within each sector of each segment, at least one descriptor measure, and preferably a plurality of measures, are computed as a function of values of pixels of underlying image belonging to a given sector.

For example, four measures can be computed as mean values of pixels belonging to a given sector taken from one of four images: three color components of the input image (R, G, B) and the image of cornerness measure (C)

$$p_{R\,i,j} = \frac{1}{|S_{i,j}| \cdot max(R)} \Sigma_{(k,l) \in S_{i,j}}\, R(x+k, y+l),$$

$$p_{G\,i,j} = \frac{1}{|S_{i,j}| \cdot max(G)} \Sigma_{(k,l) \in S_{i,j}}\, G(x+k, y+l),$$

$$p_{B\,i,j} = \frac{1}{|S_{i,j}| \cdot max(B)} \Sigma_{(k,l) \in S_{i,j}}\, B(x+k, y+l),$$

$$p_{C\,i,j} = \frac{1}{|S_{i,j}| \cdot max(C)} \Sigma_{(k,l) \in S_{i,j}}\, C(x+k, y+l).$$

where $S_{i,j}$ is the j-th sector in the i-th ring, $|S_{i,j}|$ is the number of pixels in $S_{i,j}$, (x,y) - are coordinates of the feature point (F) and (i,j) are pairs of x- and y- coordinates of vectors in $S_k$. max(R), max(G), max(B), max(C) stand for the maximum values of all pixels in component images R,G,B,C, respectively. The mean values are stored are a vector describing the j-th sector in i-th ring:

$$p_{i,j} = [p_{R\,i,j}, p_{G\,i,j}, p_{B\,i,j}, p_{C\,i,j}].$$

The above vectors are computed for all sectors in all rings. For each i-th ring having 8 sectors, the feature vector may have the following form:

$$D_i = [p_{i,1}, p_{i,2}, p_{i,3}, \dots, p_{i,8}] = [p_{R\,i,1}, p_{G\,i,1}, p_{B\,i,1}, p_{C\,i,1}, p_{R\,i,2}, \dots, p_{C\,i,8}]$$

And finally, the complete descriptor is defined as a vector consisting of all above vectors for all *m* rings:

$$D = [D_1, D_2, D_3, \dots, D_m]$$

The feature point descriptor vectors D can be computed for all feature points extracted within the given image.

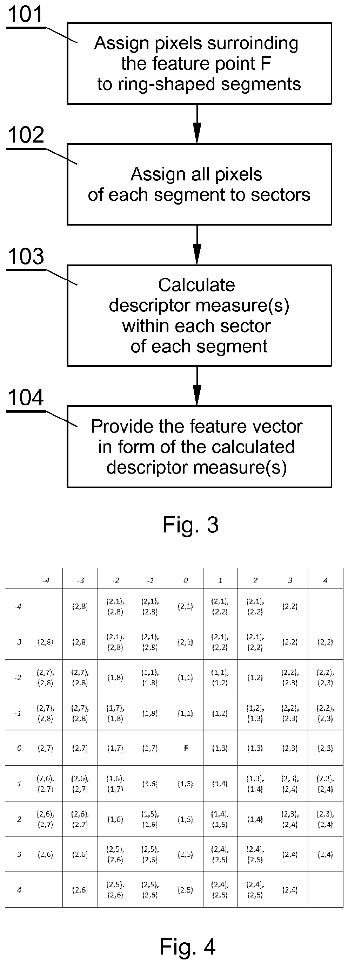

Fig. 3 shows a summarizing schematic of the above-described method for describing a surrounding of a feature point F in an image by a feature vector D. In steps 101 and 102 the pixels of the image are assigned to ring-shaped segments and sectors. In a preferred embodiment, this can be done by using a predefined mask, e.g. a 9x9 descriptor pixel mask, as shown in Fig. 4, which defines which pixels shall be assigned to which segments. Next, within each sector of each segment, at least one descriptor measure is calculated in step 103 as a measure function of values of pixels belonging to that sector. Then, the feature vector is provided in step 104 as a set of the calculated descriptor measures for all sectors of all segments.

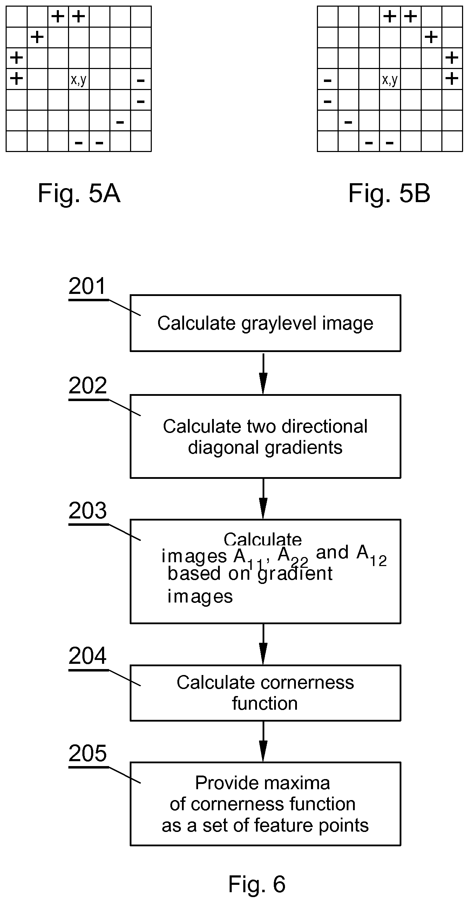

The feature point descriptor as described above is particularly useful for describing feature points located at corners. The following description presents a corner point detection method, illustrated schematically in Fig. 6, that indicates particularly relevant feature points for use with the descriptor according to the present invention.

An original color image can be stored as in various formats, while for the present example it is assumed that it is stored as a three-component structure in red-green-blue (R, G, B) format. First, in step 201, the image can be converted into a graylevel image. The conversion from color to grayscale image may be performed using any known method. For example, for each pixel *(x,y)* the output graylevel - image *I* can be computed from components: red (*R*), green(*G*) and blue(*B*) as:

$$I(x, y) = 0.2989 \cdot R(x, y) + 0.5970 \cdot G(x, y) + 0.1140 \cdot B(x, y)$$

Next, two directional diagonal gradient images $G_1$ and $G_2$ of the graylevel image *I* (or another type of representation of the original image) are computed in step 202, wherein the values of the gradient images at pixel *(x,y)* are computed as follows:

$$G_1(x, y) = \begin{aligned} &I(x, y - 3) + I(x - 1, y - 3) + I(x - 2, y - 2) + I(x - 3, y - 1) + I(x - 3, y) + \\ &-I(x, y + 3) - I(x + 1, y + 3) - I(x + 2, y + 2) - I(x + 3, y + 1) - I(x + 3, y) \end{aligned}$$

$$G_2(x, y) = \begin{aligned} &I(x, y - 3) + I(x + 1, y - 3) + I(x + 2, y - 2) + I(x + 3, y - 1) + I(x + 3, y) + \\ &-I(x, y + 3) - I(x - 1, y + 3) - I(x - 2, y + 2) - I(x - 3, y + 1) - I(x - 3, y) \end{aligned}$$

The gradients are schematically shown in Figs. 5A ($G_1(x,y)$) and Fig. 5B ($G_2(x,y)$).

Based on gradient images $G_1$ and $G_2$, images $A_{11}$, $A_{22}$ and $A_{12}$ are computed in step 203. All three images are subject to local averaging in a 5x5 mask:

$$A_{11}(x, y) = \frac{1}{25} \sum_{i=-2}^{2} \sum_{j=-2}^{2} (G1(x + i, y + j))^2;$$

$$A_{22}(x, y) = \frac{1}{25} \sum_{i=-2}^{2} \sum_{j=-2}^{2} (G2(x + i, y + j))^2;$$

$$A_{12}(x, y) = \frac{1}{25} \sum_{i=-2}^{2} \sum_{j=-2}^{2} G1(x + i, y + j) \cdot G2(x + i, y + j);$$

The cornerness function is finally computed in step 204 for each pixel as follows (multiplications are performed pixel-wise):

$$C(x, y) = A_{11}(x, y) \cdot A_{22}(x, y) - A_{12}(x, y) \cdot A_{12}(x, y).$$

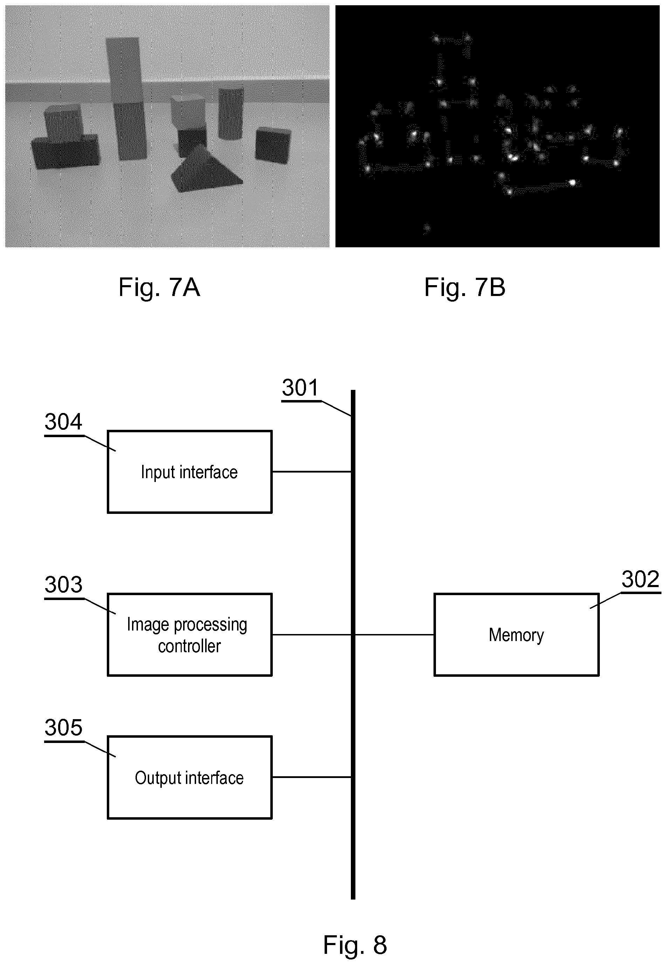

Fig. 7B shows an example result of computation of the cornerness function C for a grayscale image shown in Fig. 7A.

The cornerness function C is next processed in step 205 in order to find maxima that will point at the meaningful features of the image. The maxima used here are defined as sets of equally-valued connected pixels (such set may consist of a single point) that do not have any neighbor of higher value (they are often referred to the literature as regional maxima). Since the cornerness function determines, for each pixel, a chance that in a given point a corner is detected, only maxima of cornerness value higher than given threshold t are considered. The maxima may consist of group of connected pixels. In order to reduce them to a single point, a single point from each maximum is taken. The choice of pixel may be based on the thinning procedure reducing the object (group of connected pixels) to a single point. Finally, the set of feature points for a given image consists of single pixels belonging to cornerness function regional maxima (one point per maximum) of cornerness measure value higher than given threshold. The set of feature points may be stored in a vector of x- and y-coordinates of feature points, ordered by cornerness values from highest to lowest.

As compared to the known approaches to corner detection, the proposed cornerness detection has the following advantages. The new gradient mask, as comparing to the classic ones [moravetz80, lucas81, harris88, shi94] as well as further improvements [overgaard03, pei07], consists of a larger number pixels located farther from the central point and is oriented along two diagonals (instead of principal axes, which are typically used for gradient masks). Thanks to that fact, the gradient mask covers a wider area on both sides and it allows for more general consideration of local intensity changes. A classic gradient formula is extremely sensitive to noise, considering wider context as the proposed approach does, introduces an insensitivity to noise. The length of parts of gradient masks and the fact that they are located in a distance of 3 pixels from the central point allows to avoid the false gradient responses reflecting negligible intensity variations and to detect meaningful ones being the result of the existence of corners on the visual scene. It allows to improve the ability of gradient detector to find important directional changes in the input image.

The change of a typical gradient mask was proposed in [chen09] but the gradient mask coefficients was different to proposed in this method.

The box-filter applied to images $A_{11}$, $A_{22}$, $A_{12}$ introduces stronger filtering when comparing with Gaussian blur used in the approaches known so far. Such filtering allows to obtain better detection results when it is combined with the proposed gradient masks. The equally-valued filtering mask of a size 5x5 introduces local averaging of gradient values within the area of radius 2 around the central point. This combined with parts of the gradient mask at distance 3 points from the central point allow increases again the insensitivity to noise and ability to detect meaningful local variation reflecting image corners. Tanks to this fact the new approach outperforms the classic one.

All of the above advantages result in a simpler formula of cornerness function, as compared to classic approaches in [lucas81,harris88,shi94]. This also implies higher computational efficiency.

Therefore, the method described herein has an improved efficiency in extracting corners. The proposed formula for cornerness function is simple and has good correctness of corner detection due to the new gradient masks and a stronger low-pass filter. The proposed approach is designed particularly to deal with corners at a fixed scale, so its application is different than the approaches proposed by [mikolajczyk02,mikolajczyk04].

Fig. 8 shows a schematic of a computer-implemented image processing system for performing the descriptor and detection methods. The system may be realized using dedicated components or custom made FPGA or ASIC circuits. The system comprises a data bus 301 communicatively coupled to a memory 302 and the other elements of the system. The memory 302 may store computer program or programs executed by the controller 303 in order to execute steps of the method according to the present invention, in order to detect feature points or describe the feature points by feature vectors, based on data received via an input interface 304 (for example, the input original image) and to output the results (for example, the cornerness image *C* or feature vector *D*) via the output interface 305. The memory 302 may store any temporary data necessary to arrive at the final result of the method according to the present invention.

The present invention provides improved efficiency in detecting feature points and describing feature points in an image processing system. Therefore, the invention provides a useful, concrete and tangible result.

According to the present invention, certain computer data are processed in a image processing device according to Fig. 8. Therefore, the machine or transformation test is fulfilled and that the idea is not abstract.

It can be easily recognized, by one skilled in the art, that the aforementioned method may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

PRIOR ART REFERENCES

[alahi12] A. Alahi, R. Ortiz, and P. Vandergheynst. FREAK: Fast retina keypoint. In Computer Vision and Pattern Recognition (CVPR), 2012 IEEE Conference on, pages 510-517, June 2012.

[bay08] H. Bay, A. Ess, T. Tuytelaars, and L. Van Gool. Speeded-up robust features (SURF). Computer Vision and Image Understanding, 110(3):346 - 359, 2008. Similarity Matching in Computer Vision and Multimedia.

[calonder10] M. Calonder, V. Lepetit, Ch. Strecha, and P. Fua. BRIEF: Binary robust independent elementary features. In Kostas Daniilidis, Petros Maragos, and Nikos Paragios, editors, Computer Vision ECCV 2010, volume 6314 of Lecture Notes in Computer Science, pages 778-792. Springer Berlin Heidelberg, 2010.

[chen09] Jie Chen, Li hui Zou, Juan Zhang, and Li hua Dou. The comparison and application of corner detection algorithms. Journal of Multimedia, 4(6), 2009.

[harris88] C. Harris and M. Stephens. A combined corner and edge detector. In In Proc. of Fourth Alvey Vision Conference, pages 147-151, 1988. 54

[leutenberger11] S. Leutenegger, M. Chli, and R.Y. Siegwart. BRISK: Binary robust invariant scalable keypoints. In Computer Vision (ICCV), 2011 IEEE International Conference on, pages 2548-2555, Nov 2011.

[lowe04] D. Lowe. Distinctive image features from scale-invariant keypoints. International Journal of Computer Vision, 60(2):91-110, 2004.

[lowe99] D.G. Lowe. Object recognition from local scale-invariant features. In Computer Vision, 1999. The Proceedings of the Seventh IEEE International Conference on, volume 2, pages 1150-1157 vol.2, 1999.

[lucas81] Bruce D. Lucas and Takeo Kanade. An Iterative Image Registration Technique with an Application to Stereo Vision. International Joint Conference on Artificial Intelligence, pages 674-679, 1981.

[matas02] J. Matas, T. Obdrzalek, O. Chum, O. Local affine frames for wide-baseline stereo, Pattern Recognition, 2002. Proceedings. 16th International Conference on, vol.4, no., pp.363-366 vol.4, 2002

[mikolajczyk02] Mikolajczyk, Krystian, and Cordelia Schmid. An affine invariant interest point detector. Computer Vision-ECCV 2002. Springer Berlin Heidelberg, 2002. 128-142.

[mikolajczyk04] Mikolajczyk, Krystian, and Cordelia Schmid. Scale & affine invariant interest point detectors. International journal of computer vision 60.1 (2004): 63-86.

[moravetz80] H. Moravetz. Obstacle avoidance and navigation in the real world by a seeing robot rover. Technical Report CMU-RI-TR-3, Carnegie-Melon University, Robotics Institute, September 1980.

[overgaard03] Overgaard, Niels. On a modification to the harris corner detector. Symposium Svenska Sällskapet for Bildanalys, Stockholm. 2003.

[pei07]Pei, Soo-Chang, and Jian-Jiun Ding. Improved Harris' Algorithm for Corner and Edge Detections. Image Processing, 2007. ICIP 2007. IEEE International Conference on. Vol. 3. IEEE, 2007.

[rosten10] Edward Rosten, Reid Porter, and Tom Drummond. FASTER and better: A machine learning approach to corner detection. IEEE Trans. Pattern Analysis and Machine Intelligence, 32:105-119, 2010.

[rublee11] E. Rublee, V. Rabaud, K. Konolige, and G. Bradski. ORB: An efficient alternative to SIFT or SURF. In Computer Vision (ICCV), 2011 IEEE International Conference on, pages 2564-2571, Nov 2011.

[shi94] J. Shi and C. Tomasi. Good features to track. In Computer Vision and Pattern Recognition, 1994. Proceedings CVPR '94., 1994 IEEE Computer Society Conference on, pages 593-600, Jun 1994.

[smith97] S.M. Smith and J.M. Brady. SUSAN, a new approach to low level image processing. International Journal of Computer Vision, 23(1):45-78, 1997.

[tomasi91] Carlo Tomasi and Takeo Kanade. Detection and Tracking of Point Features. Carnegie Mellon University Technical Report CMU-CS-91-132, April 1991.

**Claims**

1. A computer-implemented method for describing a surrounding of a feature point (F) in an image by a feature vector (D), the method comprising:

    - assigning (101) the pixels of the image located around the feature point (F) to at least two segments, each segment having a form of a non-overlapping ring centered at the feature point (F),

        - wherein the ring of the first segment consists of pixels located not farther than a first radius (R1) from the feature point (F);
- and wherein the ring of the second segment consists of pixels located not farther than a second radius (R2) from the feature point (F) and that do not belong to the first ring;

- assigning (102) the pixels of each segment to angular sectors (S1, S2, ...), the sectors comprising pixels arranged within a particular angular interval size from the feature point (F), the angular interval size being equal for each of the sectors (S1, S2,...), wherein the sectors are adjacent to each other or overlap each other by the same overlapping interval size, wherein each of the pixels belongs to no more than two sectors;
- within each sector of each segment, calculating (103) at least one descriptor measure as a measure function of values of pixels belonging to that sector; and
- providing (104) the feature vector as a set of the calculated descriptor measures for all sectors of all segments; **characterized in that** the feature point (F) is detected by a detection method comprising the steps of:

- calculating (201) a graylevel image I from an original color image using any of known methods.
- calculating (202) two directional gradient images $G_1$ and $G_2$ of the graylevel image $I$ as:

$$G_1(x,y) = \quad I(x,y-3) + I(x-1,y-3) + I(x-2,y-2) + I(x-3,y-1) + I(x-3,y) + \\ -I(x,y+3) - I(x+1,y+3) - I(x+2,y+2) - I(x+3,y+1) - I(x+3,y)$$

$$G_2(x,y) = \quad I(x,y-3) + I(x+1,y-3) + I(x+2,y-2) + I(x+3,y-1) + I(x+3,y) + \\ -I(x,y+3) - I(x-1,y+3) - I(x-2,y+2) - I(x-3,y+1) - I(x-3,y)$$

- pixel-wise calculating (203) images $A_{11}$, $A_{22}$ and $A_{12}$ as:

$$A_{11}(x,y) = \frac{1}{25} \sum_{i=-2}^{2} \sum_{j=-2}^{2} (G1(x+i,y+j))^2;$$

$$A_{22}(x,y) = \frac{1}{25} \sum_{i=-2}^{2} \sum_{j=-2}^{2} (G2(x+i,y+j))^2;$$

$$A_{12}(x,y) = \frac{1}{25} \sum_{i=-2}^{2} \sum_{j=-2}^{2} G1(x+i,y+j) \cdot G2(x+i,y+j);$$

- calculating (204) a cornerness function $C$ as:

$$C(x,y) = A_{11}(x,y) \cdot A_{22}(x,y) - A_{12}(x,y) \cdot A_{12}(x,y).$$

- providing (205) maxima of the cornerness function $C$ of values higher than given threshold as a set of feature points (F);
- in case a single maximum consists of multiple connected pixels, reducing that single maximum to a single pixel by thinning.

2. The method according to claim 1, wherein the sizes of angular intervals for all sectors sum up to 360 degrees such that the neighboring sectors are adjacent to each other.

3. The method according to claim 1, wherein the sizes of angular intervals for all sectors sum up to a value from 360 to 720 degrees such that the neighboring sectors overlap each other.

4. The method according to any of previous claims, wherein the first and second radius is defined by a number of pixels, wherein the first radius (R1) is at least 2 pixels and the second radius (R2) is at least 2 pixels larger than the first radius (R1).

5. The method according to any of previous claims, wherein the pixels of each segment are assigned to one of 8 sectors.

6. The method according to any of previous claims, wherein the descriptor measure is a dispersion measure calculated as a measure function calculated as a deviation, variance or mean absolute deviation.

7. The method according to any of previous claims, wherein the descriptor measure is calculated as a function of a luminance of the image, of at least one color component of any of known three-components color spaces, for example RGB, CMY, YUV, YCbCr, HSV, HIS, or HLS, of the image or of a local gradient orientation of the image.

8. The method according to any of previous claims, wherein the ring of each further segment $i$ above the second segment consists of pixels located not farther than its radius ($R_i$) higher than the radius of the predecessor segments from the feature point (F) and that do not belong to the rings having a lower radius ($R_1, ..., R_{i-1}$).

9. The method according to claim 1, wherein the pixels surrounding the feature point (F) are assigned to 2 segments, each segment having 8 sectors such that each sector $j$ of each segment $i$ is comprises the pixels having the following ($x, y$) coordinates with respect to the feature point (F):

$$S_{1,1} = \{(-1,-2), (0,-2), (1,-2), (0,-1)\}.$$

$$S_{1,2} = \{(1,-2), (2,-2), (1,-1), (2,-1)\}$$

$$S_{1,3} = \{(2,-1), (1,0), (2,0), (2,1)\}$$

$$S_{1,4} = \{(2,1), (1,1), (2,2), (1,2)\}$$

$$S_{1,5} = \{(1,2), (0,1), (0,2), (-1,2)\}$$

$$S_{1,6} = \{(-1,2), (-1,1), (-1,2), (-2,1)\}$$

$$S_{1,7} = \{(-2,1), (-1,0), (-2,0), (-2,-1)\}$$

$$S_{1,8} = \{(-2,-1), (-1,-1), (-2,-2), (-1,-2)\}$$

$$S_{2,1} = \{(-2,-4), (-2,-3), (-1,-4), (-1,-3), (0,-4), (0,-3), (1,-4), (1,-3), (2,-4), (2,-3)\}$$

$$S_{2,2} = \{(1,-4), (1,-3), (2,-4), (2,-3), (3,-4), (3,-3), (4,-3), (3,-2), (4,-2), (3,-1), (4,-1)\}$$

$$S_{2,3} = \{(3,-2), (4,-2), (3,-1), (4,-1), (3,0), (4,0), (3,1), (4,1), (3,2), (4,2)\}$$

$$S_{2,4} = \{(3,1), (4,1), (3,2), (4,2), (3,3), (4,3), (3,4), (2,3), (2,4), (1,3), (1,4)\}$$

$$S_{2,5} = \{(2,3), (2,4), (1,3), (1,4), (0,3), (0,4), (-1,3), (-1,4), (-2,3), (-2,4)\}$$

$$S_{2,6} = \{(-1,3), (-1,4), (-2,3), (-2,4), (-3,3), (-3,4), (-4,3), (-3,2), (-4,2), (-3,1), (-4,1)\}$$

$$S_{2,7} = \{(-3,-2),(-4,-2),(-3,-1),(-4,-1),(-3,0),(-4,0),(-3,1),(-4,1),(-3,2),(-4,2)\}$$

$$S_{2,8} = \{(-1,-4),(-1,-3),(-2,-4),(-2,-3),(-3,-4),(-3,-3),$$
$$(-4,-3),(-3,-2),(-4,-2),(-3,-1),(-4,-1)\}$$

**Patentansprüche**

1. Computerimplementiertes Verfahren zur Beschreibung einer Umgebung eines Merkmalspunkts (F) in einem Bild durch einen Merkmalsvektor (D), wobei das Verfahren folgendes umfasst:

   - Zuordnen (101) der Pixel des Bilds, die um den Merkmalspunkt (F) angeordnet sind, zu wenigstens zwei Segmenten, wobei jedes Segment eine Form eines nicht überlappenden Rings aufweist, der an dem Merkmalspunkt (F) zentriert ist;

     - wobei der Ring des ersten Segments aus Pixeln besteht, die nicht weiter als ein erster Radius (R1) von dem Merkmalspunkt (F) entfernt angeordnet sind;
     - und wobei der Ring des zweiten Segments aus Pixeln besteht, die nicht weiter als ein zweiter Radius (R2) von dem Merkmalspunkt (F) angeordnet sind und nicht zu dem ersten Ring gehören;

   - Zuordnen (102) der Pixel jedes Segments zu Winkelsektoren (S1, S2, ...), wobei die Sektoren Pixel umfassen, die in einer bestimmten Winkelintervallgröße von dem Merkmalspunkt (F) angeordnet sind, wobei die Winkelintervallgröße für jeden der Sektoren (S1, S2, ...) identisch ist, wobei die Sektoren nebeneinander liegen oder sich gegenseitig mit der gleichen sich überlappenden Intervallgröße überlappen, wobei jedes der Pixel nicht mehr als zwei Sektoren angehört;
   - in jedem Sektor jedes Segments Berechnen (103) mindestens einer Deskriptormessgröße als eine Messfunktion von Werten von Pixeln, die diesem Sektor angehören; und
   - Bereitstellen (104) des Merkmalsvektors als eine Menge berechneter Deskriptormessgrößen für alle Sektoren aller Segmente;

   **dadurch gekennzeichnet, dass** der Merkmalspunkt (F) erkannt wird durch ein Erkennungsverfahren, das folgende Schritte umfasst:

   - Berechnen (201) eines Graustufenbilds $I$ aus einem ursprünglichen Farbbild unter Verwendung beliebiger bekannter Verfahren;
   - Berechnen (202) von zwei Gradientenbildern $G_1$ und $G_2$ des Graustufenbilds $I$ als:

$$G_1(x,y) = \begin{aligned} &I(x,y-3) + I(x-1,y-3) + I(x-2,y-2) + I(x-3,y-1) + I(x-3,y) + \\ &-I(x,y+3) - I(x+1,y+3) - I(x+2,y+2) - I(x+3,y+1) - I(x+3,y) \end{aligned}$$

$$G_2(x,y) = \begin{aligned} &I(x,y-3) + I(x+1,y-3) + I(x+2,y-2) + I(x+3,y-1) + I(x+3,y) + \\ &-I(x,y+3) - I(x-1,y+3) - I(x-2,y+2) - I(x-3,y+1) - I(x-3,y) \end{aligned}$$

   - pixelweises Berechnen (203) der Bilder $A_{11}$, $A_{22}$ und $A_{12}$ als:

$$A_{11}(x,y) = \frac{1}{25}\sum_{i=-2}^{2}\sum_{j=-2}^{2}(G1(x+i,y+j))^2;$$

$$A_{22}(x,y) = \frac{1}{25}\sum_{i=-2}^{2}\sum_{j=-2}^{2}(G2(x+i,y+j))^2;$$

$$A_{12}(x,y) = \frac{1}{25}\sum_{i=-2}^{2}\sum_{j=-2}^{2}G1(x+i,y+j) \cdot G2(x+i,y+j);$$

- Berechnen (204) einer Cornerness-Funktion C als:

$$C(x,y) = A_{11}(x,y) \cdot A_{22}(x,y) - A_{12}(x,y) \cdot A_{12}(x,y).$$

- Berechnen (205) von Höchstwerten der Cornerness-Funktion C von Werten, die höher sind als ein gegebener Schwellenwert als eine Menge von Merkmalspunkten (F);
- wenn ein einzelner Höchstwert aus mehreren verbundenen Pixeln besteht, Reduzieren des einzelnen Höchstwerts auf ein einzelnes Pixel durch Ausdünnen.

2. Verfahren nach Anspruch 1, wobei die Größen der Winkelintervalle für alle Sektoren in der Summe 360 Grad ergeben, so dass die benachbarten Sektoren nebeneinander liegen.

3. Verfahren nach Anspruch 1, wobei die Größen der Winkelintervalle für alle Sektoren in der Summe 360 bis 720 Grad ergeben, so dass sich die benachbarten Sektoren überlappen.

4. Verfahren nach einem der vorstehenden Ansprüche, wobei der erste und der zweite Radius durch eine Anzahl von Pixeln definiert ist, wobei der erste Radius (R1) mindestens 2 Pixel aufweist, und wobei der zweite Radius (R2) wenigstens 2 Pixel größer ist als der erste Radius (R1).

5. Verfahren nach einem der vorstehenden Ansprüche, wobei die Pixel jedes Segments einem von acht Sektoren zugeordnet werden.

6. Verfahren nach einem der vorstehenden Ansprüche, wobei die Deskriptormessgröße berechnet wird als eine Messfunktion, berechnet als eine Abweichung, Varianz oder mittlere absolute Abweichung.

7. Verfahren nach einem der vorstehenden Ansprüche, wobei die Deskriptormessgröße berechnet wird als eine Funktion einer Luminanz des Bilds, wenigstens einer Farbkomponente eines beliebigen bekannten Dreikomponentenfarbraums, wie z.B. RGB, CMY, YUV, YCbCr, HSV, HIS oder HLS, des Bilds oder einer lokalen Gradientenausrichtung des Bilds.

8. Verfahren nach einem der vorstehenden Ansprüche, wobei der Ring jedes weiteren Segments $i$ über dem zweiten Segment aus Pixeln besteht, die nicht weiter als ihr Radius ($R_i$) angeordnet sind, höher als der Radius der vorangehenden Segmente von dem Merkmalspunkt (F), und die die nicht zu den Ringen mit einem kleineren Radius ($R1, ..., Ri-1$) gehören.

9. Verfahren nach Anspruch 1, wobei die Pixel, die den Merkmalspunkt (F) umgeben, 2 Segmenten zugeordnet werden, wobei jedes Segment acht Sektoren aufweist, so dass jeder Vektor $j$ jedes Segments $i$ die Pixel mit den folgenden ($x, y$) Koordinaten in Bezug auf den Merkmalspunkt umfasst:

$$S_{1,1} = \{(-1,-2),(0,-2),(1,-2),(0,-1)\}.$$

$$S_{1,2} = \{(1,-2),(2,-2),(1,-1),(2,-1)\}$$

$$S_{1,3} = \{(2,-1),(1,0),(2,0),(2,1)\}$$

$$S_{1,4} = \{(2,1),(1,1),(2,2),(1,2)\}$$

$$S_{1,5} = \{(1,2),(0,1),(0,2),(-1,2)\}$$

$$S_{1,6} = \{(-1,2),(-1,1),(-1,2),(-2,1)\}$$

$$S_{1,7} = \{(-2,1),(-1,0),(-2,0),(-2,-1)\}$$

$$S_{1,8} = \{(-2,-1),(-1,-1),(-2,-2),(-1,-2)\}$$

$$S_{2,1} = \{(-2,-4),(-2,-3),(-1,-4),(-1,-3),(0,-4),(0,-3),(1,-4),(1,-3),(2,-4),(2,-3)\}$$

$$S_{2,2} = \{(1,-4),(1,-3),(2,-4),(2,-3),(3,-4),(3,-3),(4,-3),(3,-2),(4,-2),(3,-1),(4,-1)\}$$

$$S_{2,3} = \{(3,-2),(4,-2),(3,-1),(4,-1),(3,0),(4,0),(3,1),(4,1),(3,2),(4,2)\}$$

$$S_{2,4} = \{(3,1),(4,1),(3,2),(4,2),(3,3),(4,3),(3,4),(2,3),(2,4),(1,3),(1,4)\}$$

$$S_{2,5} = \{(2,3),(2,4),(1,3),(1,4),(0,3),(0,4),(-1,3),(-1,4),(-2,3),(-2,4)\}$$

$$S_{2,6} = \{(-1,3),(-1,4),(-2,3),(-2,4),(-3,3),(-3,4),(-4,3),(-3,2),(-4,2),(-3,1),(-4,1)\}$$

$$S_{2,7} = \{(-3,-2),(-4,-2),(-3,-1),(-4,-1),(-3,0),(-4,0),(-3,1),(-4,1),(-3,2),(-4,2)\}$$

$$S_{2,8} = \{(-1,-4),(-1,-3),(-2,-4),(-2,-3),(-3,-4),(-3,-3),$$
$$(-4,-3),(-3,-2),(-4,-2),(-3,-1),(-4,-1)\}$$

## Revendications

**1.** Procédé mis en oeuvre par ordinateur pour décrire un environnement d'un point de caractéristique (F) dans une image par un vecteur de caractéristique (D), le procédé comprenant les étapes consistant à :

attribuer (101) les pixels de l'image située autour du point de caractéristique (F) à au moins deux segments, chaque segment ayant une forme d'anneau non chevauchant centré au point de caractéristique (F),

l'anneau du premier segment étant constitué de pixels situés pas plus loin qu'un premier rayon (R1) du point de caractéristique (F) ;
et l'anneau du second segment étant constitué de pixels situés pas plus loin qu'un second rayon (R2) du point de caractéristique (F) et qui n'appartiennent pas au premier anneau ;

attribuer (102) les pixels de chaque segment à des secteurs angulaires (S1, S2,...), les secteurs comprenant des pixels disposés à l'intérieur d'une taille d'intervalle angulaire particulière à partir du point de caractéristique (F), la taille d'intervalle angulaire étant égale pour chacun des secteurs (S1, S2,...), les secteurs étant adjacents les uns aux autres ou se chevauchant par la même taille d'intervalle de chevauchement, chacun des pixels n'appartenant pas à plus de deux secteurs ;
à l'intérieur de chaque secteur de chaque segment, calculer (103) au moins une mesure descriptive en fonction des valeurs des pixels appartenant à ce secteur ; et
fournir (104) le vecteur de caractéristique sous la forme d'un ensemble de mesures descriptives calculées pour tous les secteurs de tous les segments ;
**caractérisé en ce que** le point de caractéristique (F) est détecté par un procédé de détection comprenant les étapes consistant à :

calculer (201) une image en niveaux de gris *I* à partir d'une image couleur originale en utilisant l'un quelconque des procédés connus,

calculer (202) deux images de gradient directionnel $G_1$ et $G_2$ de l'image de niveau de gris *I* comme :

$$G_1(x,y) = \begin{aligned} &I(x,y-3) + I(x-1,y-3) + I(x-2,y-2) + I(x-3,y-1) + I(x-3,y) + \\ &-I(x,y+3) - I(x+1,y+3) - I(x+2,y+2) - I(x+3,y+1) - I(x+3,y) \end{aligned}$$

$$G_2(x,y) = \begin{aligned} &I(x,y-3) + I(x+1,y-3) + I(x+2,y-2) + I(x+3,y-1) + I(x+3,y) + \\ &-I(x,y+3) - I(x-1,y+3) - I(x-2,y+2) - I(x-3,y+1) - I(x-3,y) \end{aligned}$$

calculer au pixel près (203) des images $A_{11}$, $A_{22}$ et $A_{12}$ comme :

$$A_{11}(x,y) = \frac{1}{25}\sum_{i=-2}^{2}\sum_{j=-2}^{2}(G1(x+i,y+j))^2;$$

$$A_{22}(x,y) = \frac{1}{25}\sum_{i=-2}^{2}\sum_{j=-2}^{2}(G2(x+i,y+j))^2;$$

$$A_{12}(x,y) = \frac{1}{25}\sum_{i=-2}^{2}\sum_{j=-2}^{2}G1(x+i,y+j) \cdot G2(x+i,y+j);$$

calculer (204) une fonction de saillance C comme :

$$C(x,y) = A_{11}(x,y) \cdot A_{22}(x,y) - A_{12}(x,y) \cdot A_{12}(x,y).$$

fournir (205) les maxima de la fonction de saillance C de valeurs supérieures à un seuil donné comme ensemble de points de caractéristiques (F) ;

dans le cas où un seul maximum se compose de plusieurs pixels connectés, réduire ce maximum unique à un pixel unique par amincissement.

**2.** Procédé selon la revendication 1, les tailles des intervalles angulaires pour tous les secteurs totalisant jusqu'à 360 degrés de sorte que les secteurs voisins soient adjacents les uns aux autres.

**3.** Procédé selon la revendication 1, les tailles des intervalles angulaires pour tous les secteurs totalisant une valeur de 360 à 720 degrés de sorte que les secteurs voisins se chevauchent les uns les autres.

**4.** Procédé selon l'une quelconque des revendications précédentes, les premier et second rayons étant définis par un nombre de pixels, le premier rayon (R1) étant d'au moins 2 pixels et le second rayon (R2) étant d'au moins 2 pixels plus grand que le premier rayon (R1).

**5.** Procédé selon l'une quelconque des revendications précédentes, les pixels de chaque segment étant attribués à l'un des 8 secteurs.

**6.** Procédé selon l'une quelconque des revendications précédentes, la mesure descriptive étant une mesure de dispersion calculée comme fonction de mesure calculée comme écart, variance ou écart absolu moyen.

**7.** Procédé selon l'une quelconque des revendications précédentes, la mesure descriptive étant calculée comme une fonction d'une luminance de l'image, d'au moins une composante de couleur de l'un quelconque des espaces colorimétriques à trois composantes connues, par exemple RGB, CMY, YUV, YCbCr, HSV, HIS ou HLS, de l'image ou d'une orientation locale de gradient de l'image.

**8.** Procédé selon l'une quelconque des revendications précédentes, l'anneau de chaque autre segment *i* au-dessus du second segment étant constitué de pixels situés pas plus loin que son rayon ($R_i$) plus haut que le rayon des segments précédents à partir du point de caractéristique (F) et qui n'appartiennent pas aux anneaux ayant un rayon

inférieur ($R_1$, ..., $R_{i-1}$).

9. Procédé selon la revendication 1, les pixels entourant le point de caractéristique (F) étant attribués à 2 segments, chaque segment ayant 8 secteurs de sorte que chaque secteur *j* de chaque segment *i* comprend les pixels ayant les coordonnées (x, y) suivantes par rapport au point de caractéristique (F) :

$$S_{1,1} = \{(-1,-2),(0,-2),(1,-2),(0,-1)\}.$$

$$S_{1,2} = \{(1,-2),(2,-2),(1,-1),(2,-1)\}$$

$$S_{1,3} = \{(2,-1),(1,0),(2,0),(2,1)\}$$

$$S_{1,4} = \{(2,1),(1,1),(2,2),(1,2)\}$$

$$S_{1,5} = \{(1,2),(0,1),(0,2),(-1,2)\}$$

$$S_{1,6} = \{(-1,2),(-1,1),(-1,2),(-2,1)\}$$

$$S_{1,7} = \{(-2,1),(-1,0),(-2,0),(-2,-1)\}$$

$$S_{1,8} = \{(-2,-1),(-1,-1),(-2,-2),(-1,-2)\}$$

$$S_{2,1} = \{(-2,-4),(-2,-3),(-1,-4),(-1,-3),(0,-4),(0,-3),(1,-4),(1,-3),(2,-4),(2,-3)\}$$

$$S_{2,2} = \{(1,-4),(1,-3),(2,-4),(2,-3),(3,-4),(3,-3),(4,-3),(3,-2),(4,-2),(3,-1),(4,-1)\}$$

$$S_{2,3} = \{(3,-2),(4,-2),(3,-1),(4,-1),(3,0),(4,0),(3,1),(4,1),(3,2),(4,2)\}$$

$$S_{2,4} = \{(3,1),(4,1),(3,2),(4,2),(3,3),(4,3),(3,4),(2,3),(2,4),(1,3),(1,4)\}$$

$$S_{2,5} = \{(2,3),(2,4),(1,3),(1,4),(0,3),(0,4),(-1,3),(-1,4),(-2,3),(-2,4)\}$$

$$S_{2,6} = \{(-1,3),(-1,4),(-2,3),(-2,4),(-3,3),(-3,4),(-4,3),(-3,2),(-4,2),(-3,1),(-4,1)\}$$

$$S_{2,7} = \{(-3,-2),(-4,-2),(-3,-1),(-4,-1),(-3,0),(-4,0),(-3,1),(-4,1),(-3,2),(-4,2)\}$$

$$S_{2,8} = \{(-1,-4),(-1,-3),(-2,-4),(-2,-3),(-3,-4),(-3,-3),$$
$$(-4,-3),(-3,-2),(-4,-2),(-3,-1),(-4,-1)\}$$

Fig. 1A

Fig. 1B

|  | -4 | -3 | -2 | -1 | 0 | 1 | 2 | 3 | 4 |
|---|---|---|---|---|---|---|---|---|---|
| -4 |  |  |  |  |  |  |  |  |  |
| -3 |  |  |  |  |  |  |  |  |  |
| -2 |  |  | (1,8) | (1,1), (1,8) | (1,1) | (1,1), (1,2) | (1,2) |  |  |
| -1 |  |  | (1,7), (1,8) | (1,8) | (1,1) | (1,2) | (1,2), (1,3) |  |  |
| 0 |  |  | (1,7) | (1,7) | F | (1,3) | (1,3) |  |  |
| 1 |  |  | (1,6), (1,7) | (1,6) | (1,5) | (1,4) | (1,3), (1,4) |  |  |
| 2 |  |  | (1,6) | (1,5), (1,6) | (1,5) | (1,4), (1,5) | (1,4) |  |  |
| 3 |  |  |  |  |  |  |  |  |  |
| 4 |  |  |  |  |  |  |  |  |  |

S1

S8

R1

Fig. 2A

|     | -4 | -3 | -2 | -1 | 0 | 1 | 2 | 3 | 4 |
|-----|----|----|----|----|---|---|---|---|---|
| -4  |    | (2,8) | (2,1), (2,8) | (2,1), (2,8) | (2,1) | (2,1), (2,2) | (2,1), (2,2) | (2,2) |    |
| -3  | (2,8) | (2,8) | (2,1), (2,8) | (2,1), (2,8) | (2,1) | (2,1), (2,2) | (2,1), (2,2) | (2,2) | (2,2) |
| -2  | (2,7), (2,8) | (2,7), (2,8) |    |    | S1 |    |    | (2,2), (2,3) | (2,2), (2,3) |
| -1  | (2,7), (2,8) | (2,7), (2,8) | S8 |    |    |    |    | (2,2), (2,3) | (2,2), (2,3) |
| 0   | (2,7) | (2,7) |    |    | F |    |    | (2,3) | (2,3) |
| 1   | (2,6), (2,7) | (2,6), (2,7) |    |    |   |    |    | (2,3), (2,4) | (2,3), (2,4) |
| 2   | (2,6), (2,7) | (2,6), (2,7) |    |    |   |    |    | (2,3), (2,4) | (2,3), (2,4) |
| 3   | (2,6) | (2,6) | (2,5), (2,6) | (2,5), (2,6) | (2,5) | (2,4), (2,5) | (2,4), (2,5) | (2,4) | (2,4) |
| 4   |    | (2,6) | (2,5), (2,6) | (2,5), (2,6) | (2,5) | (2,4), (2,5) | (2,4), (2,5) | (2,4) |    |

R2

Fig. 2B

20

**101** Assign pixels surroinding
the feature point F
to ring-shaped segments

**102** Assign all pixels
of each segment to sectors

**103** Calculate
descriptor measure(s)
within each sector
of each segment

**104** Provide the feature vector
in form of the calculated
descriptor measure(s)

Fig. 3

| | -4 | -3 | -2 | -1 | 0 | 1 | 2 | 3 | 4 |
|---|---|---|---|---|---|---|---|---|---|
| -4 | | (2,8) | (2,1),<br>(2,8) | (2,1),<br>(2,8) | (2,1) | (2,1),<br>(2,2) | (2,1),<br>(2,2) | (2,2) | |
| -3 | (2,8) | (2,8) | (2,1),<br>(2,8) | (2,1),<br>(2,8) | (2,1) | (2,1),<br>(2,2) | (2,1),<br>(2,2) | (2,2) | (2,2) |
| -2 | (2,7),<br>(2,8) | (2,7),<br>(2,8) | (1,8) | (1,1),<br>(1,8) | (1,1) | (1,1),<br>(1,2) | (1,2) | (2,2),<br>(2,3) | (2,2),<br>(2,3) |
| -1 | (2,7),<br>(2,8) | (2,7),<br>(2,8) | (1,7),<br>(1,8) | (1,8) | (1,1) | (1,2) | (1,2),<br>(1,3) | (2,2),<br>(2,3) | (2,2),<br>(2,3) |
| 0 | (2,7) | (2,7) | (1,7) | (1,7) | F | (1,3) | (1,3) | (2,3) | (2,3) |
| 1 | (2,6),<br>(2,7) | (2,6),<br>(2,7) | (1,6),<br>(1,7) | (1,6) | (1,5) | (1,4) | (1,3),<br>(1,4) | (2,3),<br>(2,4) | (2,3),<br>(2,4) |
| 2 | (2,6),<br>(2,7) | (2,6),<br>(2,7) | (1,6) | (1,5),<br>(1,6) | (1,5) | (1,4),<br>(1,5) | (1,4) | (2,3),<br>(2,4) | (2,3),<br>(2,4) |
| 3 | (2,6) | (2,6) | (2,5),<br>(2,6) | (2,5),<br>(2,6) | (2,5) | (2,4),<br>(2,5) | (2,4),<br>(2,5) | (2,4) | (2,4) |
| 4 | | (2,6) | (2,5),<br>(2,6) | (2,5),<br>(2,6) | (2,5) | (2,4),<br>(2,5) | (2,4),<br>(2,5) | (2,4) | |

Fig. 4

Fig. 5A

Fig. 5B

**201** Calculate graylevel image

**202** Calculate two directional diagonal gradients

**203** Calculate images $A_{11}$, $A_{22}$ and $A_{12}$ based on gradient images

**204** Calculate cornerness function

**205** Provide maxima of cornerness function as a set of feature points

Fig. 6

Fig. 7A

Fig. 7B

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6711293 B
- US 8165401 B
- US 2012070070 A
- EP 2782067 A

### Non-patent literature cited in the description

- **A. ALAHI ; R. ORTIZ ; P. VANDERGHEYNST.** FREAK: Fast retina keypoint. *Computer Vision and Pattern Recognition (CVPR), 2012 IEEE Conference,* June 2012, 510-517
- **H. BAY ; A. ESS ; T. TUYTELAARS ; L. VAN GOOL.** Speeded-up robust features (SURF). *Computer Vision and Image Understanding,* 2008, vol. 110 (3), 346-359
- BRIEF: Binary robust independent elementary features. **M. CALONDER ; V. LEPETIT ; CH. STRECHA ; P. FUA.** Computer Vision ECCV 2010, volume 6314 of Lecture Notes in Computer Science. Springer, 2010, vol. 6314, 778-792
- **JIE CHEN ; LI HUI ZOU ; JUAN ZHANG ; LI HUA DOU.** The comparison and application of corner detection algorithms. *Journal of Multimedia,* 2009, vol. 4, 6
- **C. HARRIS ; M. STEPHENS.** A combined corner and edge detector. *In Proc. of Fourth Alvey Vision Conference,* 1988, vol. 54, 147-151
- **S. LEUTENEGGER ; M. CHLI ; R.Y. SIEGWART.** BRISK: Binary robust invariant scalable keypoints. *In Computer Vision (ICCV), 2011 IEEE International Conference,* November 2011, 2548-2555
- **D. LOWE.** Distinctive image features from scale-invariant keypoints. *International Journal of Computer Vision,* 2004, vol. 60 (2), 91-110
- **D.G. LOWE.** Object recognition from local scale-invariant features. In Computer Vision, 1999. *The Proceedings of the Seventh IEEE International Conference,* 1999, vol. 2, 1150-1157
- **BRUCE D. LUCAS ; TAKEO KANADE.** An Iterative Image Registration Technique with an Application to Stereo Vision. *International Joint Conference on Artificial Intelligence,* 1981, 674-679
- **J. MATAS ; T. OBDRZALEK ; O. CHUM ; O. LOCAL.** affine frames for wide-baseline stereo, Pattern Recognition, 2002. *Proceedings. 16th International Conference,* 2002, vol. 4, 363-366
- An affine invariant interest point detector. **MIKOLAJCZYK ; KRYSTIAN ; CORDELIA SCHMID.** Computer Vision-ECCV. Springer, 2002, 128-142
- **MIKOLAJCZYK ; KRYSTIAN ; CORDELIA SCHMID.** Scale & affine invariant interest point detectors. *International journal of computer vision 60.1,* 2004, 63-86
- Obstacle avoidance and navigation in the real world by a seeing robot rover. **H. MORAVETZ.** Technical Report CMU-RI-TR-3. Robotics Institute, September 1980
- **OVERGAARD, NIELS.** On a modification to the harris corner detector. *Symposium Svenska Sällskapet for Bildanalys,* 2003
- Improved Harris' Algorithm for Corner and Edge Detections. **PEI ; SOO-CHANG ; JIAN-JIUN DING.** Image Processing, 2007. ICIP 2007. IEEE International Conference. IEEE, 2007, vol. 3
- **EDWARD ROSTEN ; REID PORTER ; TOM DRUMMOND.** FASTER and better: A machine learning approach to corner detection. *IEEE Trans. Pattern Analysis and Machine Intelligence,* 2010, vol. 32, 105-119
- **E. RUBLEE ; V. RABAUD ; K. KONOLIGE ; G. BRADSKI.** ORB: An efficient alternative to SIFT or SURF. *In Computer Vision (ICCV), 2011 IEEE International Conference,* November 2011, 2564-2571
- **J. SHI ; C. TOMASI.** Good features to track. *In Computer Vision and Pattern Recognition, 1994. Proceedings CVPR '94., 1994 IEEE Computer Society Conference,* June 1994, 593-600
- **S.M. SMITH ; J.M. BRADY.** SUSAN, a new approach to low level image processing. *International Journal of Computer Vision,* 1997, vol. 23 (1), 45-78
- **CARLO TOMASI ; TAKEO KANADE.** Detection and Tracking of Point Features. *Carnegie Mellon University Technical Report CMU-CS-91-132,* April 1991